# EUROPEAN PATENT APPLICATION

(11) **EP 4 848 774 A1**
(43) Date of publication of application: **02.12.2026**
(21) Application number: 26180135.1
(22) Date of filing: 21.05.2026
(51) Int. Cl.: H04W 12/082, H04W 12/069, H04W 28/02, H04W 48/06

(54) **MANAGEMENT OF SERVICE OF TERMINAL DEVICES IN WIRELESS COMMUNICATION NETWORK**

(30) Priority: 26.05.2025 FI 20253209
(71) Applicant: Telia Company AB, 169 94 Solna (SE)
(72) Inventor: JALKANEN, Tero, 04300 TUUSULA (FI); SARAJISTO, Tomi, 00790 HELSINKI (FI)
(74) Representative: Berggren Oy

(57) **Abstract**

A method for managing a service of terminal devices (120) by a wireless communication network (110) is provided, the method comprises: receiving (210) from a trusted party an indication to apply a specific operational mode; generating (220) an inquiry to receive data identifying terminal devices (120) that are verified in the wireless communication network (110); comparing (230) the data of the identified terminal devices (120) to data identifying all terminal devices served by the wireless communication network (110) to determine unverified terminal devices (130) served by the wireless communication network **(110);** and generating (240) a control signal to cancel the service of the wireless communication network (110) for terminal devices (120) being unverified. Also, a network node (170) and a computer program are provided.

## Description

### TECHNICAL FIELD

The invention concerns in general the technical field of wireless communication. More particularly, the invention concerns a management of a service of terminal devices in wireless communication networks.

### BACKGROUND

An operation of wireless communication networks is crucial for maintaining a society operative. Therefore, various approaches to keep the wireless communication networks operational have been introduced. Primarily these relate to guaranteeing a supply of energy to the communication networks as well as establishing plans how one network entity, such as a base station, may be replaced with one or more other ones so as to maintain the network operational e.g. in case the network entity in question breaks down.

As said, the wireless communication networks face various types of situations, even being attacked, that require specific actions to maintain the network in question operational. Thus, there is room for introducing novel approaches to manage a service provided by the wireless communication network in specific situations.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An object of the invention is to present a method, a network node and a computer program for managing a service of terminal devices by a wireless communication network.

The objects of the invention are reached by a method, a network node and a computer program as defined by the respective independent claims.

According to a first aspect, a method for managing a service of terminal devices by a wireless communication network is provided, the method, performed by a network node, comprises:
receiving from a trusted party an indication to apply a specific operational mode in the wireless communication network,
generating, in response to a receipt of the indication to apply the specific operational mode, an inquiry to receive data identifying terminal devices that are verified in the wireless communication network,
comparing the data of the identified terminal devices to data identifying all terminal devices served by the wireless communication network to determine unverified terminal devices served by the wireless communication network,
generating a control signal to cancel the service of the wireless communication network for terminal devices being unverified.

The indication to apply the specific operational mode may comprise data defining measures to be applied in the service of the terminal devices by the wireless communication network within the specific operational mode.

The control signal to cancel the service of the wireless communication network may e.g. be generated through a de-registration procedure of the terminal devices being unverified.

The method may further comprise:
generating a further control signal to adjust the service of the wireless communication network with respect to the terminal devices identified being verified.

For example, the adjustment may correspond to at least one of the following: limiting bandwidth; reducing data rates; limiting a user of at least one application executed by the terminal device.

The method may also comprise following steps performed prior to receiving the indication from the trusted party:
receiving a registration request to the wireless communication network from the terminal device,
determining if the registration request carries data defining a certificate,
inquiring, in response to that the registration request carries the data defining the certificate, a validity of the certificate from a validation data storage,
storing, in response to a receipt of a response indicating that the certificate is valid, data in data storage, the data comprising an identifier of the terminal device having the valid certificate.

Moreover, the specific operational mode may comprise prioritizing network resources for verified terminal devices to ensure uninterrupted service during network congestion or emergencies.

The specific operational mode may also comprise an application of predefined energy-saving policies to extend an operational time of the wireless communication network.

Still further, the specific operational mode may comprise temporarily suspending non-essential services to maintain network stability and performance for verified terminal devices.

The specific operational mode may also comprise implementing Quality of Service (QoS) policies to prioritize critical communications.

The method may also comprise a step of resuming a normal operational mode upon receiving a resume indication from the trusted party.

Furthermore, the cancellation of the service of the wireless communication network for terminal devices being unverified may be applied to the terminal devices located within a predefined geographical region.

For example, the adjustment of service may be based on one of the following: a requested application; an Access Point Name/Data Network Name; a network slice.

According to a second aspect, a network node of a wireless communication network for managing a service of terminal devices by a wireless communication network is provided, the network node is configured to execute the steps of the method according to the first aspect as defined above.

According to a third aspect, a computer program is provided, the computer program comprising instructions to cause the network node according to the second aspect as defined above to execute the steps of the method according to the first aspect as defined above.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically a communication system according to an example.
Figure 2 illustrates schematically a method according to an example.
Figure 3 illustrates schematically a flow chart according to an example.
Figure 4 illustrates schematically a system according to an example.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

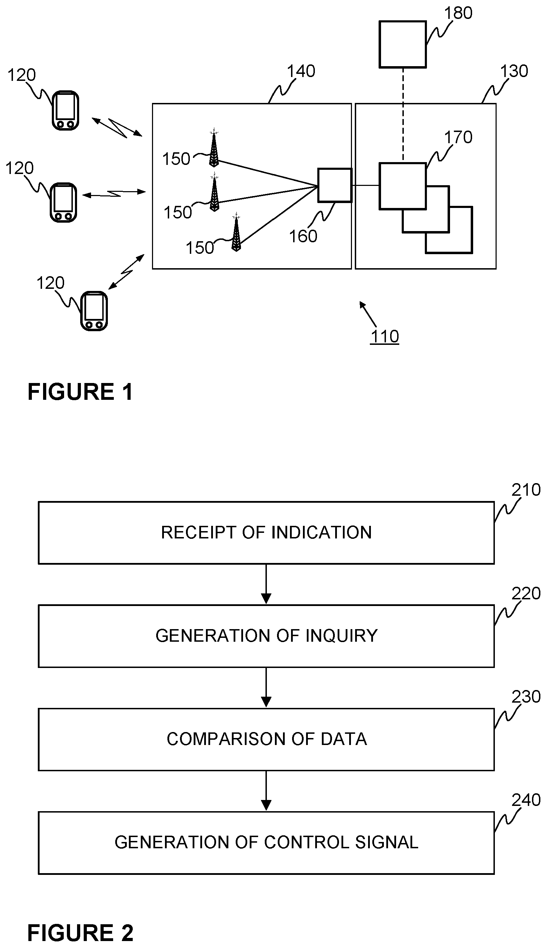

Figure 1 illustrates schematically a communication system into which the present invention is implementable. The communication system comprises a wireless communication network 110 and one or more terminal devices 120 that communicative wirelessly utilizing services provided by the wireless communication network. The wireless communication network 110 may consist of a core network (CN) 130 and a radio access network (RAN) 140. The RAN 140 may be implemented to comprise RAN nodes 150 capable of provide wireless communication service to the terminal devices 120 with one or more radio access technologies wherein the RAN nodes 150 shall be understood as base stations in accordance with this example. Thus, the RAN node 150, and the base station, may also be called as an access point of a wireless communication network 110. The RAN node 150 may be, for example, a base station for 5G, also called New Radio (NR). In 5G, the RAN node 150 may be a NG-RAN node, which is defined as either a gNB (a next generation NodeB) or an ng-eNB. A gNB is a node providing NR user plane and control plane protocol terminations towards the terminal devices 120. The RAN nodes 150 may be connected e.g. through an interface node 160 to the core network 130 wherein the interface node 160 may also comprise functionalities for controlling an operation of the RAN nodes 150 or such functionalities may be arranged in the RAN nodes 150.

As such, the base stations 150 include one or more processors, one or more memories, one or more network interfaces, and one or more transceivers interconnected through one or more communication channels. Each of the one or more transceivers includes a receiver, Rx, and a transmitter, Tx. The one or more transceivers are connected to one or more antennas. The one or more memories include computer program code.

Moreover, the wireless communication network 110 may include a core network node or nodes 170 that may include core network 130 functionality, and which provides connectivity via a link or links with a further network, such as a telephone network and/or a data communications network (e.g., the Internet). Such core network functionality for 5G may include location management functions (LMF(s)) and/or access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely example functions that may be supported by the network node(s) 170, and it may also be arranged that both 5G and LTE functions might be supported. The RAN nodes 150 are communicatively connected over a link to one or more network nodes 170 of the core network 130 e.g. through the interface node 160. The link may be implemented as, e.g., an NG interface for 5G, or an S1 interface for LTE, or other suitable interface for other standards. The network node 170 includes one or more processors, one or more memories, and one or more network interfaces (N/W I/F(s)), interconnected through one or more communication channels. The one or more memories include computer program code. The one or more memories and the computer program code are configured to, with the one or more processors, cause the network node 170 to perform one or more operations as described herein.

The wireless communication network 110 may also be communicatively connected to one or more trusted parties 180. In the non-limiting example as shown in Figure 1 the trusted party 180 may be arranged to be communicatively connected to a network node 170 of the core network 130 through a dedicated, and advantageously secured, communication channel. Naturally, the communicative connection may be arranged through the RAN 140. The trusted party 180 herein refers to such party that may be provided an access to deliver data to the wireless network 110 wherein the data may be indicative of that the wireless communication 110 shall apply a specific operational mode. Such a trusted party 180 may e.g. be a governmental organization such as an authority e.g. entitled to issue licenses to telecom operators to run a wireless communication network 110.

Next, at least some aspects of the invention are described by referring to Figure 2. Figure 2 illustrates schematically a method according to an example. The method provides a solution for managing a service of terminal devices 120 of a wireless communication network 110 wherein the method is performed by a network node 170, such as a network management entity like SMF. In a step denoted with 210 in Figure 2 the network node 170 configured to perform the method receives 210 an indication from a trusted party 180 to apply a specific operational mode in the wireless communication network 110. As already mentioned, the trusted party herein refers to a party that may generate indications instructing the wireless communication network 110 in a predefined manner. An implementation of the trusted party 180 as such shall be understood as a computing system through which the indications may be generated, i.e. the computing system of the trusted party 180 is communicatively connected with the wireless communication in any applicable manner. Naturally, the communicative connection may be established through a terminal device 120 of a person who manually sets the indication in the wireless communication network 110. A trigger for the generation of the indication by the trusted party 180 may e.g. be an awareness of some specific situation, such as a natural disaster in a service are of the wireless communication network 110, an electricity outage or even an attack against the network (cf. a cyber-attack) etc.

In accordance with the invention the network node 170 configured to perform the method is configured to generate 220, in response to the receipt 210 of the indication to apply the specific operational mode, an inquiry to receive data identifying terminal devices 120 that are verified for the wireless communication network 110. This refers to an inquiry towards data storage into which it is stored data defining terminal devices 120 that are verified through a specific verification procedure in the wireless communication network 110 in question. In response to the inquiry the data storage, or the entity storing the above-mentioned data, is configured to generate a response comprising the data identifying the terminal devices 120 that are verified as already mentioned.

In response to the receipt of the data through the inquiry 220 the network node 170 is configured to compare 230 the data of the identified terminal devices 120 to data identifying all terminal devices 120 served by the wireless communication network 110. Hence, the network node 170 performing the method is aware of, or at least has access to data identifying all terminal devices 120 served by the wireless communication network 110. The purpose of the step of comparison 230 is to determine unverified terminal devices 120 served by the wireless communication network 110 for the next steps of the method.

In response to the determination of the unverified terminal devices 120 through the comparison 230 the network node 170 is configured to generate 240 a control signal to cancel the service of the wireless communication network 110 for terminal devices 120 being unverified. The control signal may e.g. be generated 240 internally so that the network node 170 determines the unverified terminal devices 120 so that the network node 170 at least possesses identifiers of the respective terminal devices 120, such as an IMSI/SUPI, an IMEI, a TMSI and/or a MSISDN and/or any respective identifier, and includes these to the control signal so that an entity in the wireless communication network 110 receiving the information through applicable signaling that may cancel the service as mentioned. Naturally, the entity may be the network node 170 itself especially if it has the management role in the network 110. The cancellation of the service of the unverified terminal devices 120 may e.g. be achieved through a so-called de-registration procedure towards the unverified terminal devices 120 e.g. over Non-Access Stratum signaling protocol or a similar procedure. For example, this may involve sending a de-registration request from the network node 170 to the terminal device 120, instructing it to disconnect from the wireless communication network 110. This may be performed e.g. by reusing the standard Network Initiated Detach procedures. Additionally, the network node 170 may be configured to update data storage(s), such as its internal databases, to mark the terminal device 120 as unverified, preventing it from re-registering until it meets the verification criteria. Other methods may include blocking the terminal device's IMSI or IMEI at the network level, effectively preventing any network access. Furthermore, the terminal device 120 may be set to be partially blocked by the wireless communication network 110, for example allowing attachment only to the lowest common denominator network such as 2G while preventing access to other radio network technologies in the area.

The above-described mechanism provides a tool to manage a load of the wireless network 110 in a specific situation detected on the basis of the indication received 210 from the trusted party 180. Moreover, the service of the wireless communication network 110 may be guaranteed in an improved manner to the terminal devices 120 being verified, i.e. to the terminal devices 120 which may be considered to be more important than the unverified devices 120.

For the sake of completeness, it is worth mentioning that the above-described method to a service of the manage terminal devices 120 may be implemented only to a portion of the wireless communication network 110. For example, the portion of the wireless communication network 110 may be defined geographically e.g. so that the method is applied to terminal devices 120 being unverified which locate in a predefined region having a coverage of the wireless communication network 110. In this kind of approach, the indication received 210 may comprise data descriptive of a region/position wherein the method is to be applied and the steps of generating 220 the inquiry, comparing 230 the pieces of data and generating 240 the control signal are performed accordingly in view of the defined region/position.

Moreover, the network node 170 may also be configured to generate a further control signal, called as a second control signal, to the number of terminal devices 120 that are indicated to have a verified status based on the inquiry. Namely, the network node 170 may be configured to generate the further control signal to cause an adjustment of the service of the verified terminal devices 120 by the wireless communication network 110. The adjustment of the service is preferably such that it reduces the load of the wireless communication network 110 when continuing serving the verified terminal devices 120. As an example, the network node 170 may indicate with the further control signal that a usage of data is to be limited and start operations to achieve this, such as limiting available bandwidth and/or reducing data rates and so forth. Naturally, the indication with the further control signal may cause an adjustment of operation of the terminal device(s) 120 receiving the control signal in question. This adjustment may e.g. include preventing or limiting the use of certain applications and/or functionalities in the terminal device(s) 120, such as disabling data services, restricting access to specific network resources, or reducing the available bandwidth. Alternative solutions may involve implementing Quality of Service (QoS) policies to prioritize critical communications, or temporarily suspending non-essential services to ensure network stability and performance for verified terminal devices 120. Furthermore, the wireless communication network 110 may adjust the service (e.g. limit the access) based on the service and/or the application the terminal device 120 is requesting to use, as well as based on the Access Point Name/Data Network Name (APN/DNN) or a network slice.

Herein it is referred to the specific operational mode and it shall be understood as a mode wherein the service of the wireless communication network 110 is provided at least to a predefined extent to a certain group of terminal devices 120, i.e. at least to those that are verified. This specific operational mode may comprise network management operations e.g. through internal controlling for prioritizing network resources for verified terminal devices 120 to ensure they receive uninterrupted service even during network congestion or emergencies. Alternatively or in addition, the specific operational mode may also comprise an application of predefined policies for energy conservation, such as reducing power consumption by limiting network functions to essential services only, thereby extending the operational time during power outages. Still further, the specific operational mode may involve temporarily suspending non-essential services to maintain network stability, shutting down parts of the core and/or radio network and implementing Quality of Service (QoS) policies to prioritize critical communications. This may again be implemented as internal control operations of the wireless communication network in accordance with a predefined plan and/or policies accessible to the network node 170 being responsible for the activities. Thus, the aim by applying the specific operational mode may e.g. be to guarantee a sufficiency of electrical energy to keep the wireless communication network 110 operative e.g. in a power outage situation or emergency situation wherein the wireless communication network 110 is supplied from local energy reserve, such as from a battery pack of a base station.

The foregoing description relies on an approach that the terminal devices 120 are verified for the wireless communication network 110 and information on the verified terminal devices 120 is stored as described. The terminal device specific verification procedure may be, in accordance with at least some embodiments of the invention, based on a provision of certificates to a number of terminal devices 120 e.g. so that the certificate is included in a subscription and obtainable therefrom. Thus, the terminal device 120 may be configured to generate a signal carrying the certificate to the wireless communication network 110 that is carried over the RAN 140 to the core network 130 and a network node 170 therein. The network node 170 is configured to verify the certificate with respect to data stored in a validation data storage e.g. in a form of a database and if a response to the verification indicates that certificate received from the terminal device 120 is valid, the terminal device 120 may be defined to be verified and data indicative of the valid verification may be stored with applied identifier(s) in a dedicated data storage configured to store information on the verified terminal devices 120 wherein the information comprises an applied identifier of the terminal device 120. Hence, the data storage stores data in order to enable the step denoted 220 of the method. For avoidance of doubt, it is worthwhile to mention that the entity configured to perform the verification on the basis of the certificate may be another to the network node 170. In such an approach the entity arranged to perform the verification is configured to store the data to data storage accessible by the entity, i.e. the network node 170, performing the method as schematically illustrated in Figure 2. A non-limiting example of an applicable data storage is IMEI database or IR.21 database.

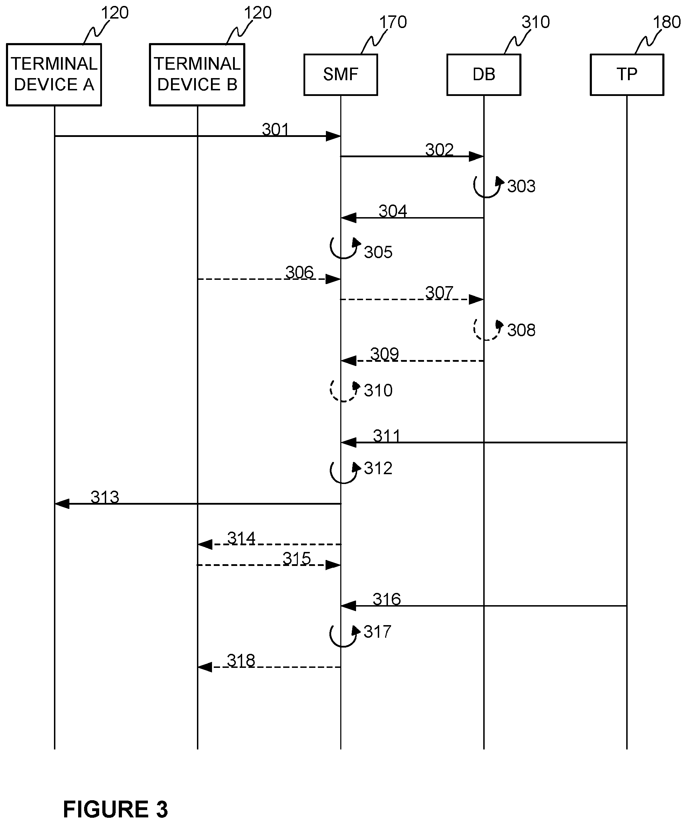

Figure 3 illustrates schematically aspects described at least in part in the foregoing description as a flow chart. In the flow chart a management of two terminal devices 120 named terminal device A and B in Figure 3 are depicted wherein the terminal device A cannot be verified as explained in the forthcoming description and the terminal device B is verifiable. The flow chart may be described as follows:
A. New terminal devices 120 registers to the wireless communication network 110 e.g. for the first time, as a part of the registration procedure the terminal devices 120 provide a verification data, cf. applied certificate, to an entity configured to receive it which is the network node 170 in this example which may be a network management entity of 5G network (SMF). The provision of the verification data is illustrated with arrows 301 and 306 in Figure 3.
B. The network node 170 (e.g. the SMF in 5G SA core network) checks the verification data against data storage 310 which may be implemented as a database. The data storage may even be arranged to be managed by a trusted party 180 that issues certificates. This may be arranged by reusing some standardized API, such as through NEF or via some proprietary IP based interface in 5G networks. The checking, i.e. the verification is shown with arrows 302 and 303 with respect to the terminal device A and with arrows 307 and 308 with respect to the terminal device B.
C. The data storage 310 confirms the results of verification to the network node 170 (arrows 304 and 309 in Figure 3). As mentioned, herein it is assumed that the terminal device A cannot be verified e.g. for a reason that it cannot deliver a certificate or it is not valid and the terminal device B is verified. The network node 170 stores the data so that information on the verified terminal devices 120 is obtainable. For example, it may store the information only on the verified terminal devices 120 in an applied data storage, such as with so-called UDSF (Unstructured Data Storage Function). The storing of the respective data is shown with arrows 305 and 310 in Figure 3. As said, it may be arranged so that no data is stored with respect to devices not verifiable in the described manner, or vice versa. For sake of clarity, even if the terminal device A is not verifiable, it may be provided with the service of the wireless communication network 110.
D. At some point of time the trusted party 180 generates an indication to the network node 170 wherein the indication carries data requesting that the wireless communication network 110 shall apply a specific operational mode (Arrow 311 in Figure 3). The indication may also comprise data defining the requested measures to be applied in the service of the terminal devices 120 by the wireless communication network 110 within the specific operational mode, such as limiting a bandwidth and so on as already mentioned.
E. In response to the receipt of the indication the network node 170 is configured to generate 220 the inquiry to the data storage to receive data identifying the terminal devices that are verified in the wireless communication network 110 and comparing the data to all terminal devices served by the wireless communication network 110 to determine the unverified terminal devices 120 served by the wireless communication network 110. This phase is denoted by the arrow 312 in Figure 3.
F. The network node 170 generates a control signal that causes a cancellation of the service of the wireless communication network 110 with respect to the terminal device A (arrow 313). The control signal is not necessarily generated to the terminal device A, but as an internal signaling in a network node 170 and/or in the core network 130 that causes the cancellation of the service. Correspondingly, another control signal may be generated towards the terminal device B that causes an adjustment of the service of the wireless communication network 110 with respect to the terminal device B (arrow 314). The terminal device B may respond to the control signal e.g. to acknowledge the information (arrow 315). The second control signal with respect to the terminal device B may also be an internal signaling in a network node 170 and/or in the core network 130 that causes the adjustment of the service.
G. At some point of time, the trusted party 180 may inform with a resume indication that a normal operational mode may be resumed in the wireless communication network 110 (arrow 316).
H. The network node 170 may perform a detection of verified terminal devices 120 being served wherein the detection may also comprise a sub-step of determining affected terminal devices 120 due to the adjustment of services by the network 110. This is shown with arrow 317 in Figure 3.
I. A respective control signal may be generated e.g. towards the terminal device 120 (shown with arrow 318) to resume a normal mode of operations.

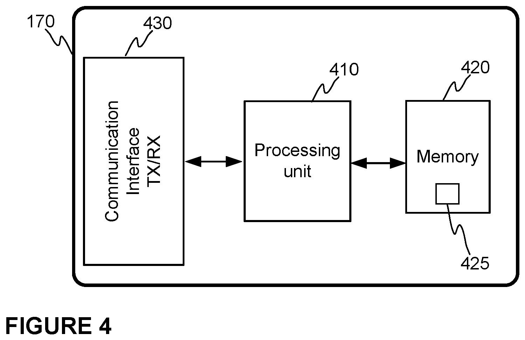

Figure 4 illustrates an example of a system in a form of an apparatus suitable to implement the function of the network node 170 of the wireless communication network 110 as described. In other words, the system may be configured to implement at least part of the method as described. The execution of the respective method, or at least some portions of it, may be achieved by arranging a processing unit 410 comprising at least one processor to execute at least some portion of computer program code 425 stored in at least one memory 420 causing the processor 410, and, thus, the apparatus to implement the method steps as described in order to execute the function as described. In other words, the processing unit 410 may be arranged to access the memory 420 and to retrieve and to store any information therefrom and thereto. Moreover, the processing unit 410 may be configured to control communication through one or more communication interfaces 430 for accessing the other entities being involved in the operation, such as the other nodes/devices in a manner as described in the description herein. Hence, the communication interface 430 may be arranged to implement, possibly under control of the processing unit 410, a number of communication protocols, such as an IP or any other communication protocol, for communicating with one or more entities to receive input and to output data as described. The term communication interface 430 shall be understood in a broad manner comprising necessary hardware and software elements for implementing the communication techniques. Further, the system in question may comprise one or more input/output devices for inputting and outputting information. In accordance with the present invention such input/output devices forming a user interface may at least comprise a touch screen, but may also comprise further entities, such as a physical keyboard, buttons, display, loudspeaker, microphone camera and so on. In some implementation of the system at least some of the input/output devices may be external to the system and coupled to it either wirelessly or in a wired manner. For sake of clarity, the processing unit 410 herein refers to any unit or a plurality of units suitable for processing information and control the operation of the system in general at least in part, among other tasks. The operations mentioned may e.g. be implemented with a microcontroller solution with embedded software. Similarly, the invention is not limited to a certain type of memory 420, but any memory unit or a plurality of memory units suitable for storing the described pieces of information, such as portions of computer program code and/or parameters, may be applied in the context of the present invention. Moreover, at least the mentioned entities may be arranged to be at least communicatively coupled to each other with an internal data connection, such as with a data bus.

In some examples, the system may be implemented with a distributed computing environment in which a plurality of computing apparatuses is configured to cooperate to cause an execution of the method according to at least one of the examples as described. A non-limiting example of such a distributed computing system may be that a first apparatus is configured to perform one or more steps of the respective method, and a second apparatus, and any further apparatuses, in turn, may be configured to perform the remaining steps needed to complete operation as described.

As derivable from above, some aspects of the present invention may relate to a computer program product which, when executed by at least one processor, cause a system to perform at least some portions of the method as described. For example, the computer program product may comprise at least one computer-readable non-transitory medium having the computer program code 425 stored thereon. The computer-readable non-transitory medium may comprise a memory device or a record medium such as a CD-ROM, a DVD, a Blu-ray disc, or another article of manufacture that tangibly embodies the computer program. As another example, the computer program may be provided as a signal configured to reliably transfer the computer program.

Still further, the computer program code 425 may comprise a proprietary application, such as computer program code for generating the data record in the manner as described.

The computer program code 425 may also be considered to include the definitions and instructions of an execution of the application of the data record in a further use.

The specific examples provided in the description given above should not be construed as limiting the applicability and/or the interpretation of the appended claims. Lists and groups of examples provided in the description given above are not exhaustive unless otherwise explicitly stated.

## Claims

1. A method for managing a service of terminal devices (120) by a wireless communication network (110), the method, performed by a network node (170), comprises:
receiving (210) from a trusted party an indication to apply a specific operational mode in the wireless communication network (110),
generating (220), in response to a receipt of the indication to apply the specific operational mode, an inquiry to receive data identifying terminal devices (120) that are verified in the wireless communication network (110),
comparing (230) the data of the identified terminal devices (120) to data identifying all terminal devices served by the wireless communication network (110) to determine unverified terminal devices (120) served by the wireless communication network (110),
generating (240) a control signal to cancel the service of the wireless communication network (110) for terminal devices (120) being unverified.

2. The method according to claim 1, wherein the indication to apply the specific operational mode comprises data defining measures to be applied in the service of the terminal devices (120) by the wireless communication network (110) within the specific operational mode.

3. The method according to any of the preceding claims, wherein the control signal to cancel the service of the wireless communication network (110) is generated through a de-registration procedure of the terminal devices (120) being unverified.

4. The method according to any of the preceding claims, the method further comprises:
generating a further control signal to adjust the service of the wireless communication network (110) with respect to the terminal devices (120) identified being verified.

5. The method according to claim 4, wherein the adjustment corresponds to at least one of the following: limiting bandwidth; reducing data rates; limiting a user of at least one application executed by the terminal device (120).

6. The method according to any of the preceding claims, wherein the method comprises following steps performed prior to receiving the indication from the trusted party:
receiving a registration request to the wireless communication network (110) from the terminal device (120),
determining if the registration request carries data defining a certificate,
inquiring, in response to that the registration request carries the data defining the certificate, a validity of the certificate from a validation data storage,
storing, in response to a receipt of a response indicating that the certificate is valid, data in data storage, the data comprising an identifier of the terminal device (120) having the valid certificate.

7. The method according to any of the preceding claims, wherein the specific operational mode comprises prioritizing network resources for verified terminal devices (120) to ensure uninterrupted service during network congestion or emergencies.

8. The method according to any of the preceding claims, wherein the specific operational mode comprises an application of predefined energy-saving policies to extend an operational time of the wireless communication network.

9. The method according to any of the preceding claims, wherein the specific operational mode comprises temporarily suspending non-essential services to maintain network stability and performance for verified terminal devices (120).

10. The method according to any of the preceding claims, wherein the specific operational mode comprises implementing Quality of Service (QoS) policies to prioritize critical communications.

11. The method according to any of the preceding claims, the method further comprises:
resuming a normal operational mode upon receiving a resume indication from the trusted party.

12. The method according to any of the preceding claims, wherein the cancellation of the service of the wireless communication network for terminal devices (120) being unverified is applied to the terminal devices (120) located within a predefined geographical region.

13. The method according to any of the preceding claims 4-12, wherein the adjustment of service is based on one of the following: a requested application; an Access Point Name/Data Network Name; a network slice.

14. A network node (170) of a wireless communication network (110) for managing a service of terminal devices (120) by a wireless communication network (110), the network node (170) is configured to execute the steps of the method claim 1.

15. A computer program comprising instructions to cause the network node (170) of claim 14 to execute the steps of the method of claim 1.
